# EUROPEAN PATENT APPLICATION

(11) **EP 1 962 172 A1**
(43) Date of publication of application: **27.08.2008**
(21) Application number: 06832570.3
(22) Date of filing: 14.11.2006
(51) Int. Cl.: G06F 3/02, G06F 3/023, G06F 3/033, G06F 3/041, H01H 25/04, H04M 1/23, H04M 1/247

(54) **INPUT DEVICE**

(30) Priority: 14.11.2005 JP 2005329434
(71) Applicant: Matsushita Electric Industrial Co., Ltd., Kadoma-shi Osaka 571-8501 (JP)
(72) Inventor: INOUE, Shigeyuki c/o Matsushita Electric Industrial Co.,Ltd., Shiromi, Chuo-ku, Osaka-shi Osaka 540-6207 (JP); TAKASAKI, Shinichi c/o Matsushita Electric Industrial Co.,Ltd., Shiromi, Chuo-ku, Osaka-shi Osaka 540-6207 (JP); YAMAMOTO, Hiroshi c/o Matsushita Electric Industrial Co.,Ltd., Shiromi, Chuo-ku, Osaka-shi Osaka 540-6207 (JP)
(74) Representative: Pautex Schneider, Nicole Véronique
(86) International application number: PCT/JP2006/322608
(87) International publication number: WO 2007/055367

(57) **Abstract**

To enable Japanese character input and the like to be performed efficiently by a simple operation. An input device includes: a device body (111); a rotator (104) that rotates in a plane parallel to a predetermined plane of the device body (111); a section specification unit (131) that specifies a predetermined section (102) of an annular area of the device body (111), where the annular area lies along the rotator (104) and is divided into a plurality of sections in a rotation direction; a rotation amount detection unit (105) that detects a rotation amount of the rotator (104) from the section specified by the section specification unit (131); and a rotation amount determination unit (135) that determines the rotation amount detected by the rotation amount detection unit (105).

## Description

### Technical Field

The present invention relates to input devices for inputting characters or operation control information to portable personal computers, mobile phones, remote controls of electronic devices, portable audiovisual products, and the like.

### Background Art

As the miniaturization and functional expansion of electronic devices continue to progress, there is a growing need for more efficient user interfaces that enable a lot of information to be inputted by a simple input operation. Especially mobile phones, which are becoming increasingly widespread, have come to support functions such as an e-mail function of sending/receiving character information and a WWW browsing function, in addition to a voice communication function. This creates the demand for user interfaces with high input efficiency that lend themselves to these additional functions.

Despite such a background, user interfaces of mobile phones currently in widespread use are still a push-button type in which push buttons are arranged in a grid. However, an invention relating to a small, easy-to-use mobile phone that is capable of inputting numbers by operating one lever has been made (for example, see Patent Reference 1).

FIG. 1 shows an input device used in a mobile phone described in Patent Reference 1.

FIG. 2 is a sectional view taken along the arrows of FIG. 1, showing terminals that are arranged circularly about a central axis of a commander 4, and a guide plate for the terminals.

FIG. 3 is a sectional view of a base part of the commander 4, showing a point of contact where a contact 13 (not illustrated) selects a terminal.

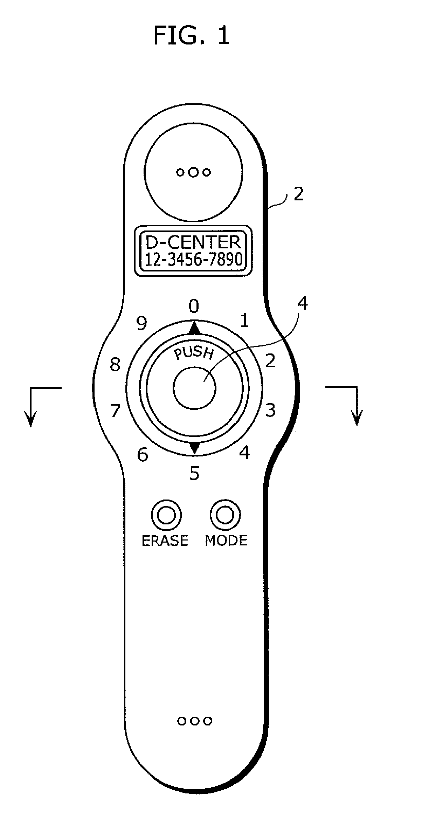

In FIGS. 1, 2, and 3, the lever-type commander 4 can be tilted and pressed. By tilting the commander 4 toward one of a plurality of terminals 12, a number assigned to that terminal 12 is selected. Further, by pressing the commander 4 in a direction of an enclosure, a transmission signal of the selected number is generated. Note that a contact 15 is used for generating the transmission signal when the commander 4 is pressed.

Also, an invention relating to an information input unit that is capable of performing an efficient operation with less finger movements by using a jog dial has been made (for example, see Patent Reference 2).

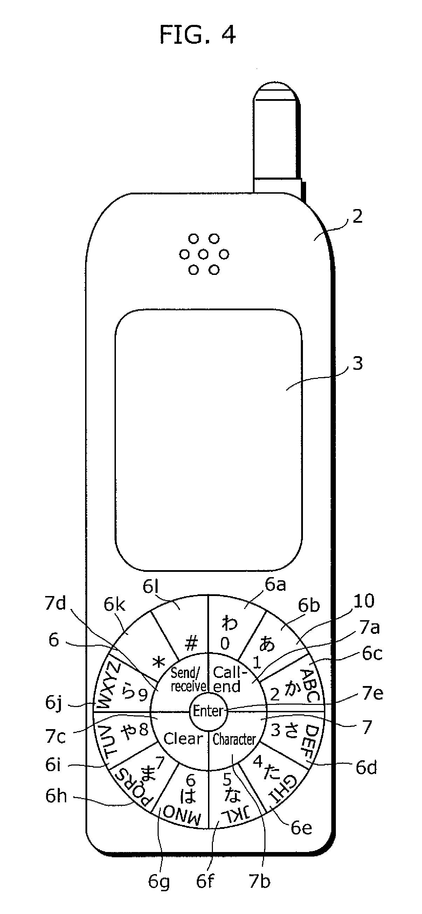

FIG. 4 shows a mobile phone to which a conventional information input unit described in Patent Reference 2 is applied.

In this conventional example, a display 3 for displaying various images in a send/receive operation is provided on a surface of a mobile phone body 2. An information input operation unit 10 is disposed on a lower side of this display 3. The information input operation unit 10 has a structure in which a jog dial unit 7 is placed inside an annular button key unit 6. The button key unit 6 is made up of number/character/symbol input button keys 6a to 6l which are annularly arranged. The jog dial unit 7 includes a round Enter push key 7e located at a center of the circular shape of the button key unit 6, and a Call-end push key 7a, a Character push key 7b, and a Clear push key 7d which are located around the Enter push key 7e. In this structure, the button key unit 6 and the jog dial unit 7 are integrally rotatable about the center of the jog dial unit 7.

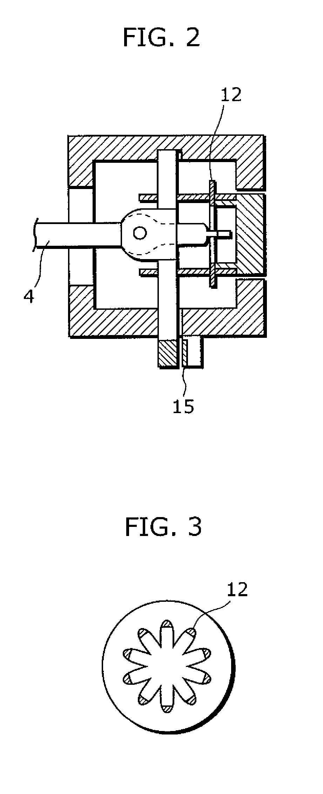

An operator presses one of the number/character/symbol input button keys 6a to 6l, and then rotates the button key unit 6. As a result, a character such as 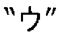 in the 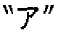 row of the Japanese gojuon can be selected.
Patent Reference 1: Japanese Unexamined Patent Application Publication No. 08-154120 (Claim 3, FIGS. 3 and 4, Claim 4, FIG. 1).
Patent Reference 2: Japanese Unexamined Patent Application Publication No. 2001-296953 (Claim 5, FIG. 1).

### Disclosure of Invention

### Problems that Invention is to Solve

However, in the conventional structure shown in Patent Reference 1, the number of contacts 13 is sufficient to input the numbers from 0 to 9, but they are insufficient for English alphabet input, Japanese hiragana input, or Japanese katakana input. An attempt to forcefully relate these contacts to the character input causes a significant decrease in operability. On the other hand, increasing the number of contacts to support the character input is undesirable in terms of an enclosure size.

In the conventional structure shown in Patent Reference 2, a plurality of pieces of information are assigned to each of the input button keys 6a to 6l, with there being no need to increase the number of contacts. However, a position of a button key for designating a predetermined function or character changes with the rotation of the jog dial. Accordingly, even when inputting the same character or making the same menu selection, the operator needs to visually search for the desired key, because the position of the predetermined button key may be different each time. Therefore, the conventional structure shown in Patent Reference 2 has a problem of poor operability.

To solve the above conventional problems, an object of the present invention is to provide an input device that realizes efficient character input and menu selection so that many signals can be inputted by a simple operation.

### Means to Solve the Problems

To solve the above problems, an input device according to the present invention is an input device including: a device body; a rotator provided on the device body; a press detection unit that is provided on the device body and detects whether or not the rotator is pressed down to an annular area that is located under the rotator; a section specification unit that specifies one of a plurality of sections of the annular area according to a signal from the press detection unit, the annular area being divided into the plurality of sections in a rotation direction of the rotator; a rotation amount detection unit that detects a rotation amount of the rotator, from when the press detection unit detects that the rotator is pressed down to the annular area; an information group holding unit that holds a plurality of information groups corresponding to the plurality of sections; an information group specification unit that specifies an information group corresponding to the section specified by the section specification unit, from among the plurality of information groups held in the information group holding unit; and an information determination unit that determines, from the information group specified by the information group specification unit, unit information corresponding to the rotation amount detected by the rotation amount detection unit, as input information.

Preferably, the press detection unit may include: a plurality of section correspondence units provided on the device body in correspondence with the plurality of sections; and a section selection unit that is attached to the rotator and selects one of the plurality of section correspondence units.

Preferably, the plurality of section correspondence units may include a plurality of terminals that are each assigned to a different one of the plurality of sections on the device body, wherein the section selection unit includes a contact that is attached to a surface of the rotator facing the plurality of terminals and selects one of the plurality of terminals by contacting the terminal.

According to the above, character input and the like can be performed efficiently by a rotation that is a simple and intuitive operation.

Preferably, the contact may include a plurality of contacts that correspond to and are equal in number to the plurality of terminals.

According to the above, the section can be specified without rotating the rotator. This contributes to a more efficient input environment.

Preferably, the input device may further include an operation unit that is attached to a surface of the rotator opposite to the surface facing the plurality of terminals and rotates the rotator, wherein the contact contacts the terminal when the operation unit is pressed down.

Preferably, the information determination unit may determine, as the input information, the unit information corresponding to the rotation amount detected by the rotation amount detection unit, when the press detection unit detects that the rotator is released from the press or that the rotator is pressed down to the annular area again.

According to the above, one input operation can be completed either by pressing a member and then performing the reverse operation of releasing the member from the pressed state, or by pressing a member and then pressing the same member again. This provides an easy and intuitive input environment.

Preferably, the information group specification unit may, after specifying the information group, specify another information group upon detecting, based on the signal from the press detection unit, that the rotator is released from the press or that the rotator is pressed down to the annular area, in a case where the rotation amount detected by the rotation amount detection unit is 0.

According to the above, an information group can be specified just by pressing the same member. This makes it possible to specify a wide range of information easily.

Preferably, the input device may further include an information presentation unit that presents input target information on a screen, the input target information including at least one part of the information group specified by the information group specification unit and being subject to the determination of the input information by the information determination unit.

Preferably, the information presentation unit may present the input target information in a form of a circular arc.

The information presentation unit may change the input target information presented on the screen, according to the rotation amount detected by the rotation amount detection unit.

Preferably, the information presentation unit may present, on the screen, the unit information corresponding to the rotation amount detected by the rotation amount detection unit, in a larger size than other unit information included in the input target information.

The information presentation unit may present, on the screen, the unit information corresponding to the rotation amount detected by the rotation amount detection unit, in a more noticeable color than other unit information included in the input target information.

According to the above, the operation state of the input device can be recognized visually. Hence the input operation can be performed more reliably.

Moreover, to achieve the above object, an input method according to the present invention is an input method for use in an input device that includes a device body and a rotator provided on the device body, the input method including: a press detection step of detecting whether or not the rotator is pressed down to an annular area that is located under the rotator; a section specification step of specifying one of a plurality of sections of the annular area according to a detection signal of the press in the press detection step, the annular area being divided into the plurality of sections; an information group specification step of specifying an information group corresponding to the section specified in the section specification step; a rotation amount detection step of detecting a rotation amount of the rotator, from when the press is detected in the press detection step; and an information determination step of determining, from the information group specified in the information group specification step, unit information corresponding to the rotation amount detected in the rotation amount detection step, as input information.

According to the above, the problems can be solved by the same advantages as mentioned above. The problems can equally be solved by the same advantages as above according to an input program that causes a computer to execute these steps.

### Effects of the Invention

According to the input device of the present invention, predetermined information is set in correspondence with each button key position, so that the user can move the keys based on his/her memory. This enhances operability.

### Brief Description of Drawings

FIG. 1 is a front view of an input device described in Patent Reference 1.
FIG. 2 is a sectional view of the input device.
FIG. 3 is a front view of a guide plate in the input device.
FIG. 4 is a front view of a mobile phone to which an input device described in Patent Reference 2 is applied.

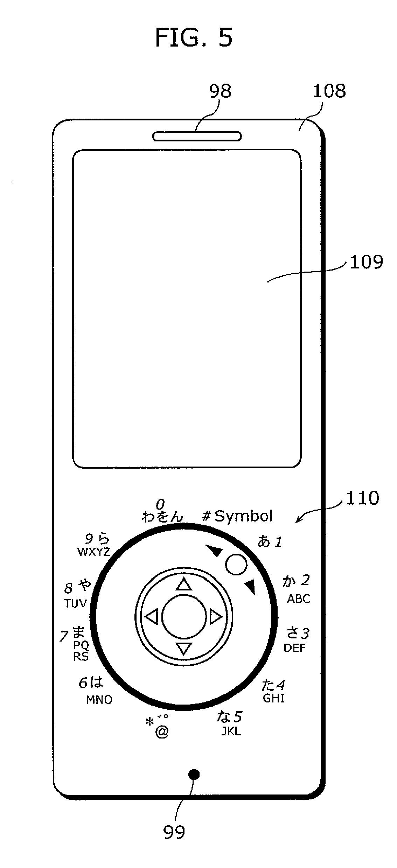

FIG. 5 is a front view of a mobile phone to which an input device according to an embodiment of the present invention is applied.

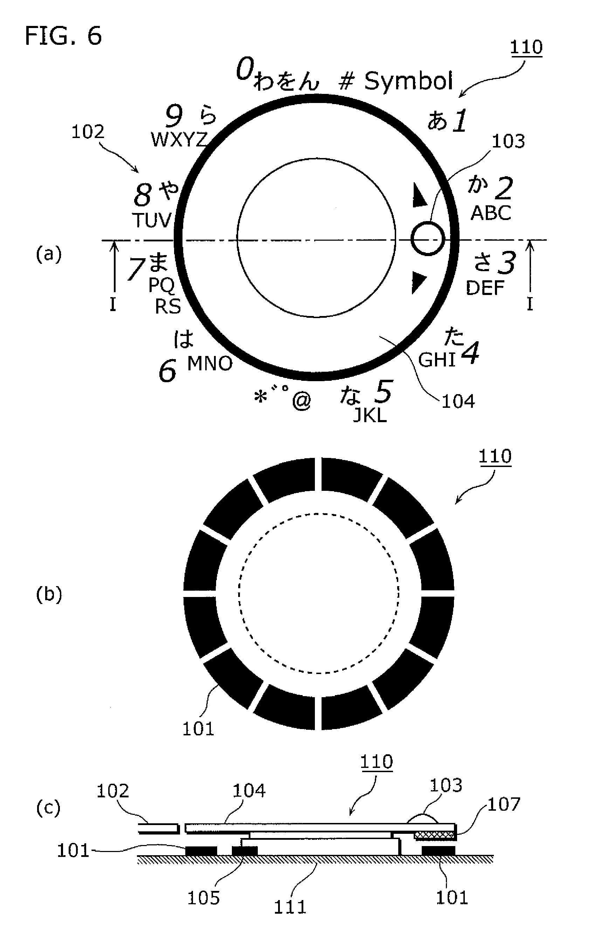

FIG. 6 is an exploded view of the input device, where FIG. 6(a) is a front view, FIG. 6(b) is a front view with a rotator 104 removed, and FIG. 6(c) is a sectional view taken along the line I-I in FTG. 6(a).

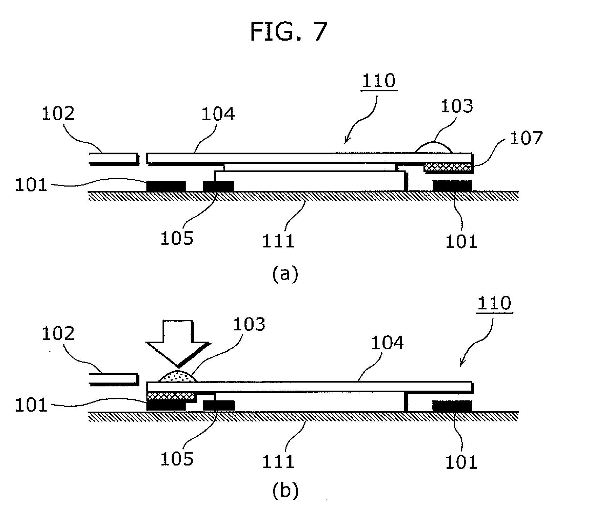

FIG. 7 is a sectional view showing a state of connection and separation between a terminal and a contact, where FIG. 7(a) shows a state before a press, and FIG. 7(b) shows a state where the rotator is rotated one half of a turn in a pressed state.

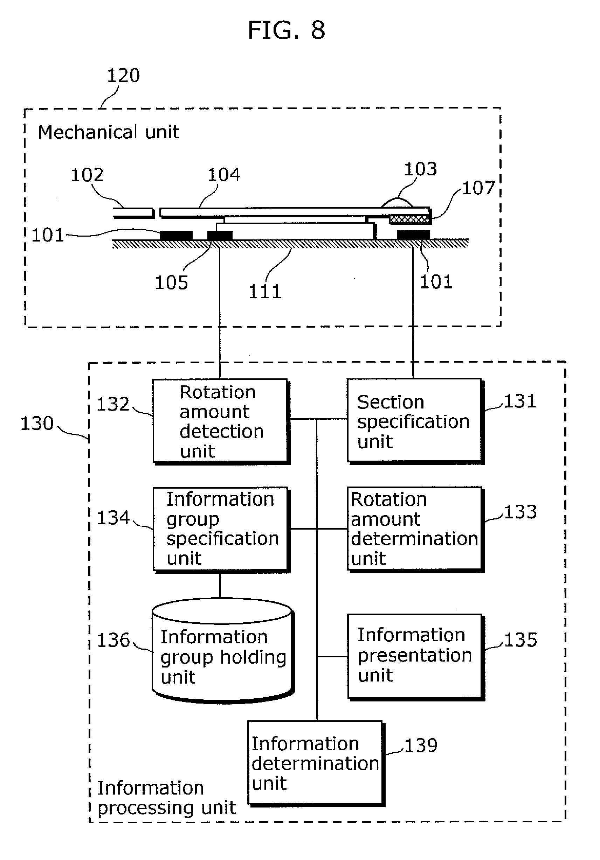

FIG. 8 is a block diagram showing a functional structure of the input device according to the embodiment.

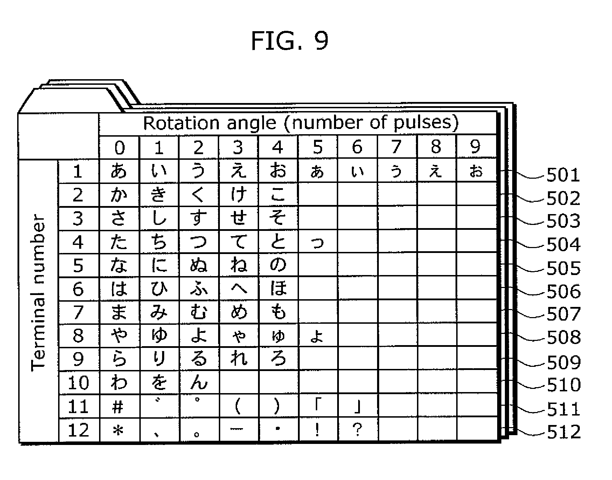

FIG. 9 is a conceptual view of information groups held in an information group holding unit.

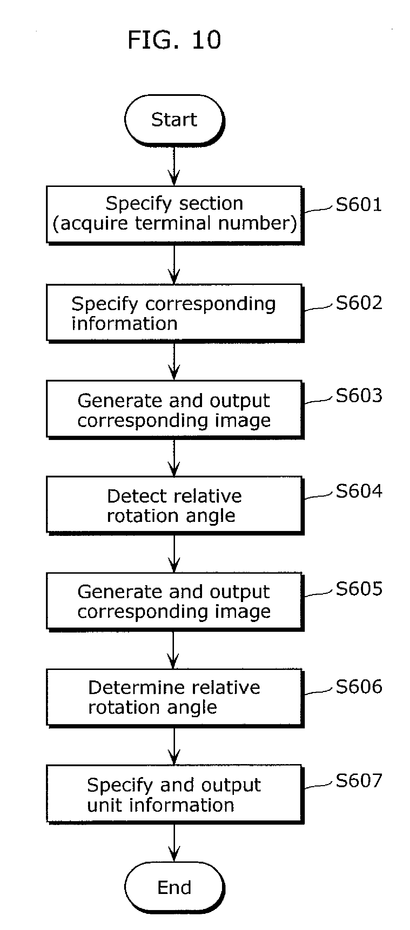

FIG. 10 is a flowchart showing an operation of the input device.

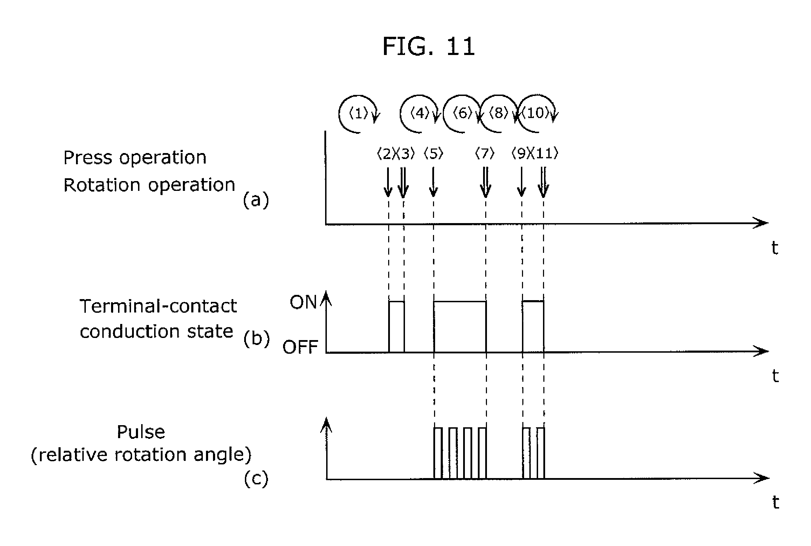

FIG. 11 is a graph representing a press and rotation of the rotator and a signal state resulting from the press and rotation.

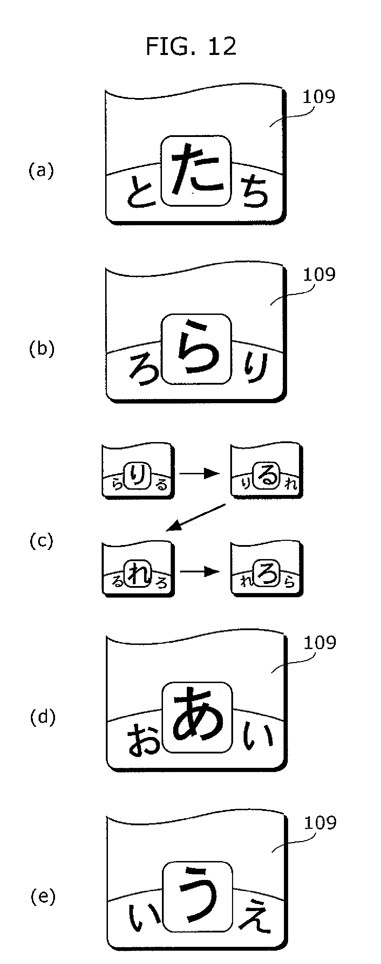

FIG. 12 shows a display example of information inputted in the input device.

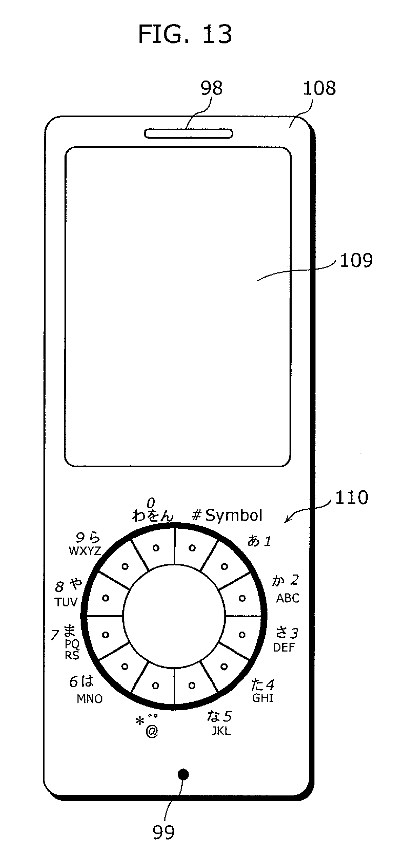

FIG. 13 is a front view of a mobile phone to which an input device according to an embodiment of the present invention is applied.

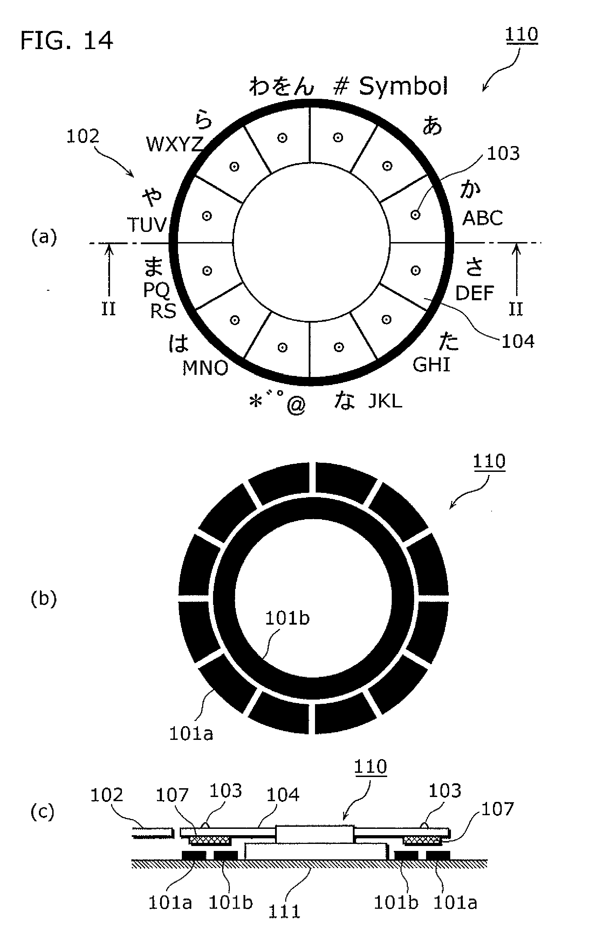

FIG. 14 is an exploded view of the input device according to the second embodiment, where FIG. 14(a) is a front view, FIG. 14(b) is a front view with a rotator 104 removed, and FIG. 14(c) is a sectional view taken along the line II-II in FIG. 14(a).

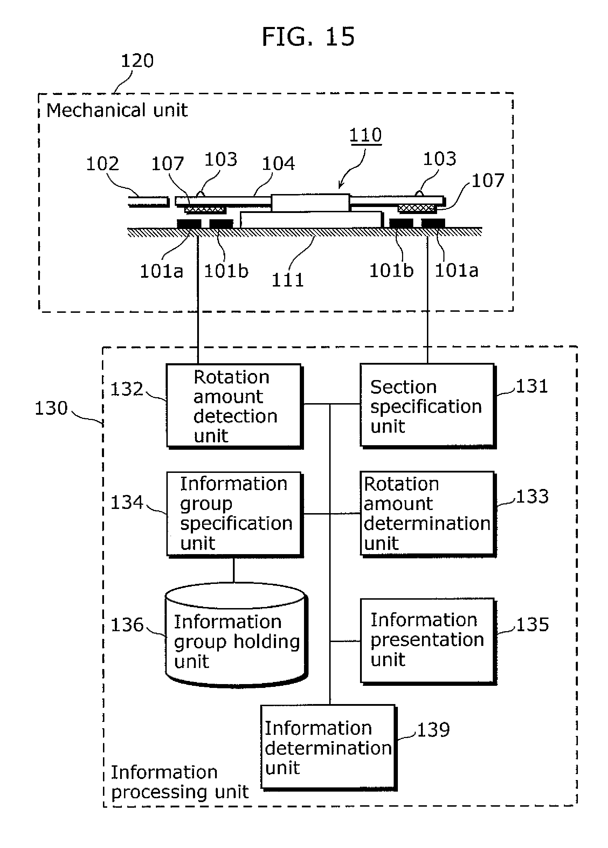

FIG. 15 is a block diagram showing a functional structure of the input device according to the second embodiment.

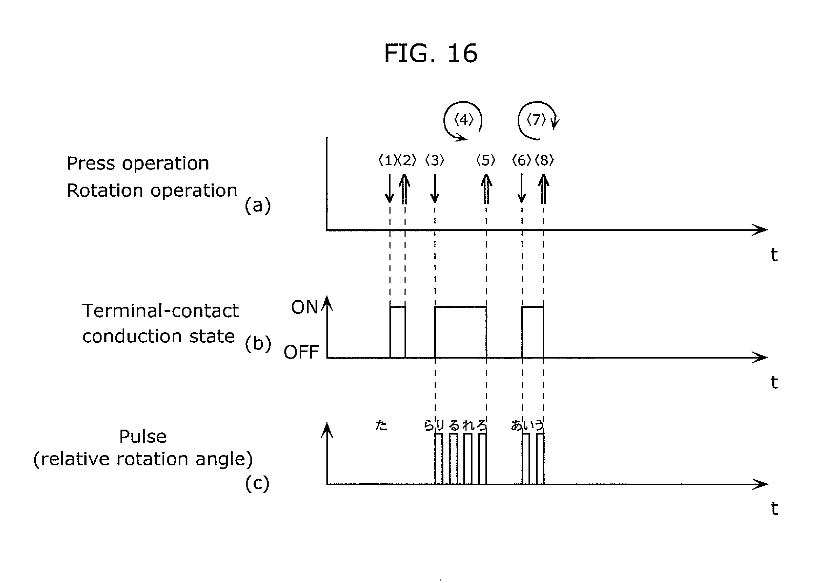

FIG. 16 is a graph representing a press and rotation of the rotator and a signal state resulting from the press and rotation.

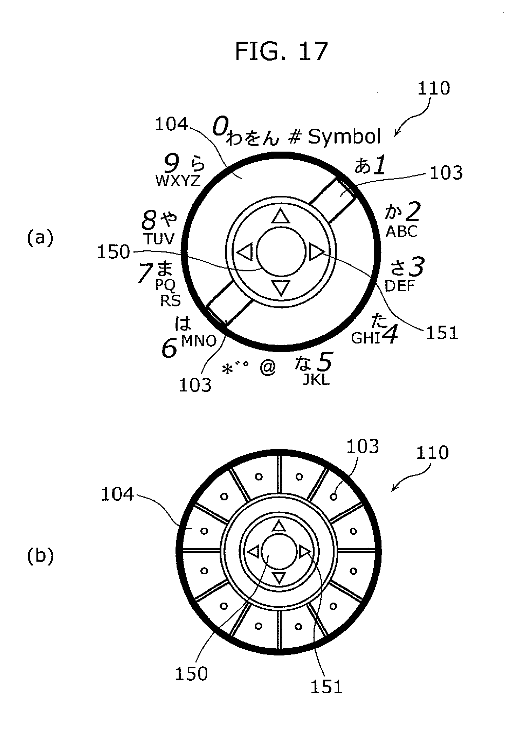

FIG. 17 is a front view of an input device and especially an operation unit according to a variation.

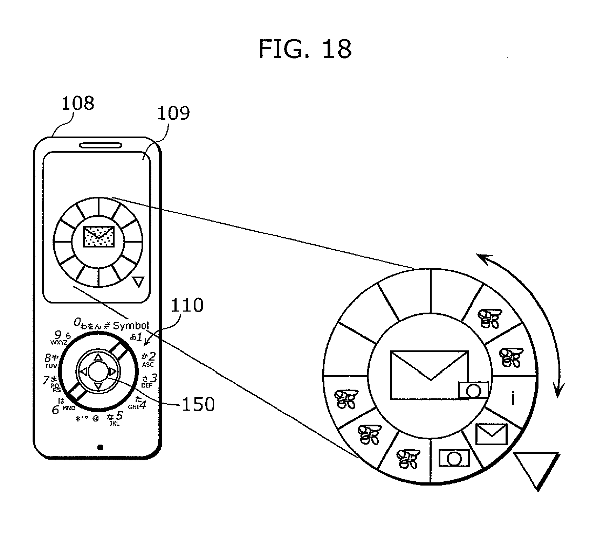

FIG. 18 shows a situation when hierarchical information is selected using the input device.

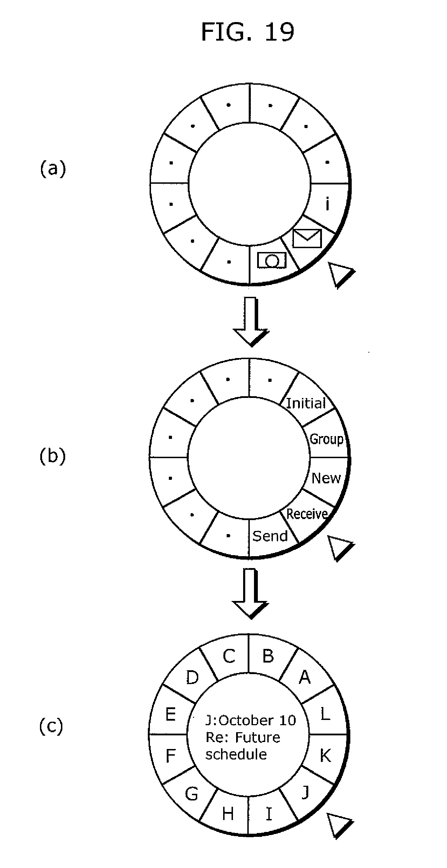

FIG. 19 is a conceptual view of a state of selection of hierarchical information.

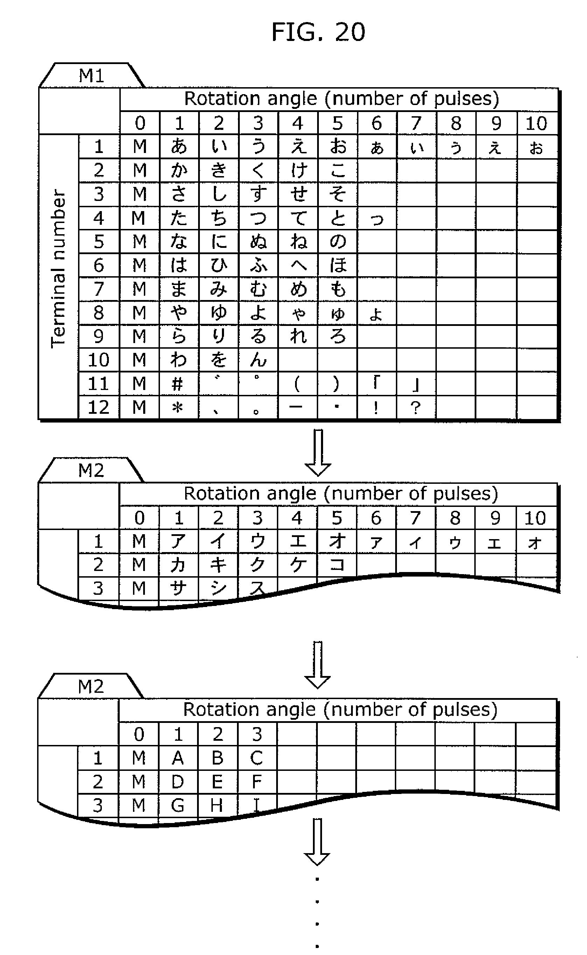

FIG. 20 is a conceptual view of a sate of information groups in the case where mode change information is inputted in the input device.

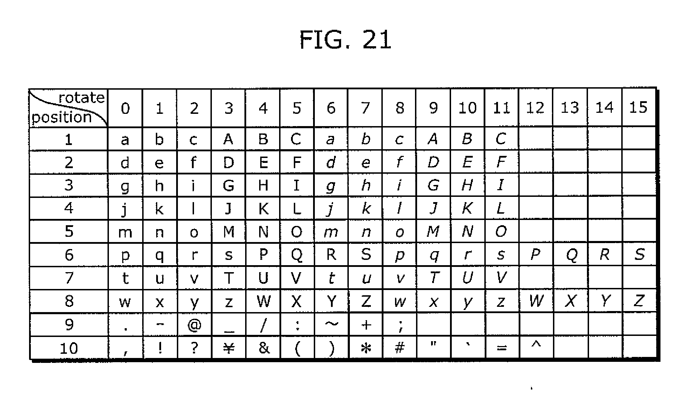

FIG. 21 is a conceptual view of information groups held in the information group holding unit in an alphabet input mode.

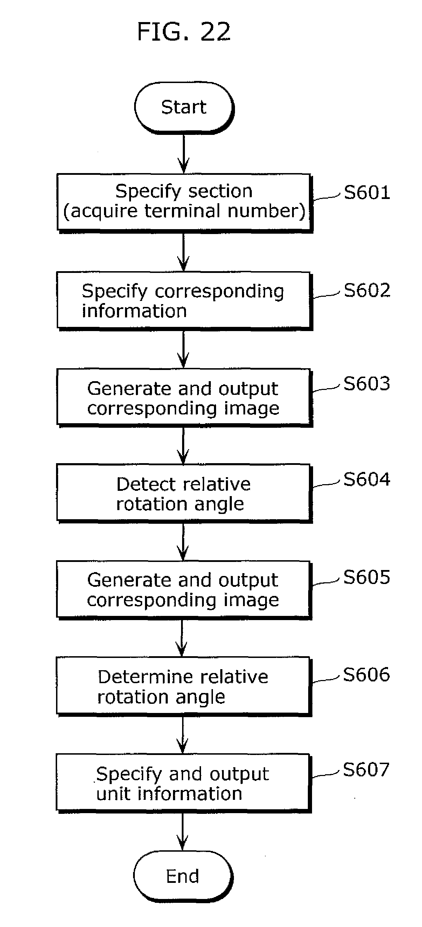

FIG. 22 is a flowchart showing an operation of the input device.

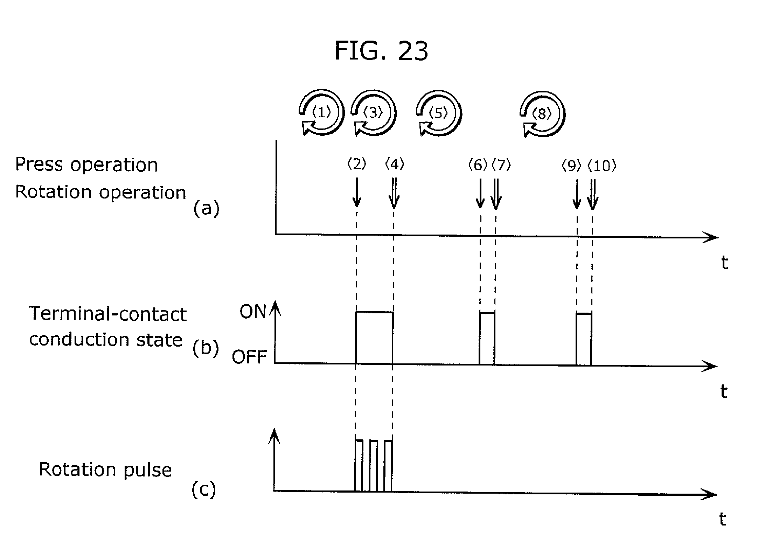

FIG. 23 is a graph representing a press and rotation of the rotator and a signal state resulting from the press and rotation.

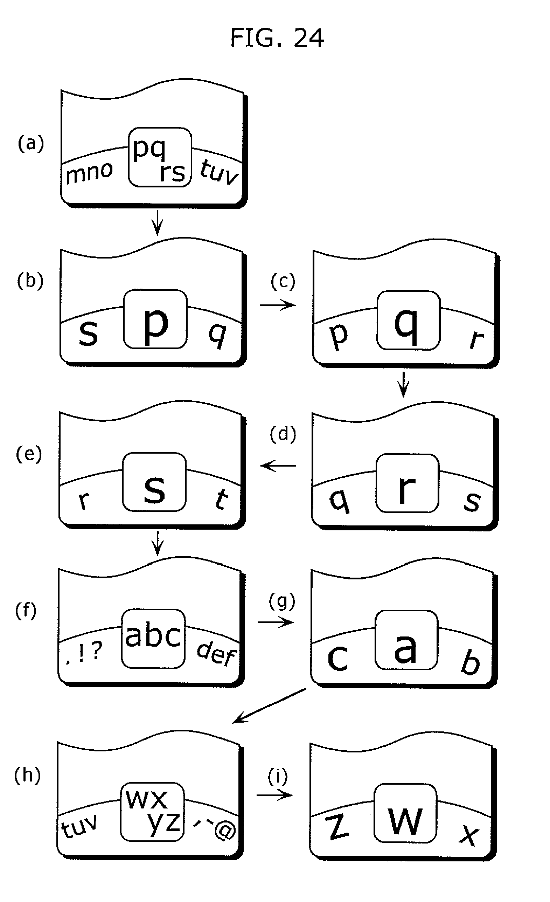

FIG. 24 shows a display example of information inputted in the input device.

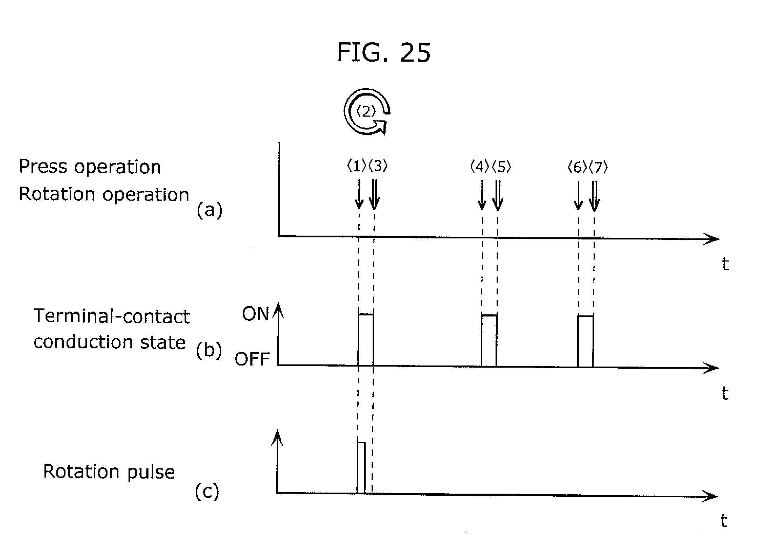

FIG. 25 is a graph representing a press and rotation of the rotator and a signal state resulting from the press and rotation.

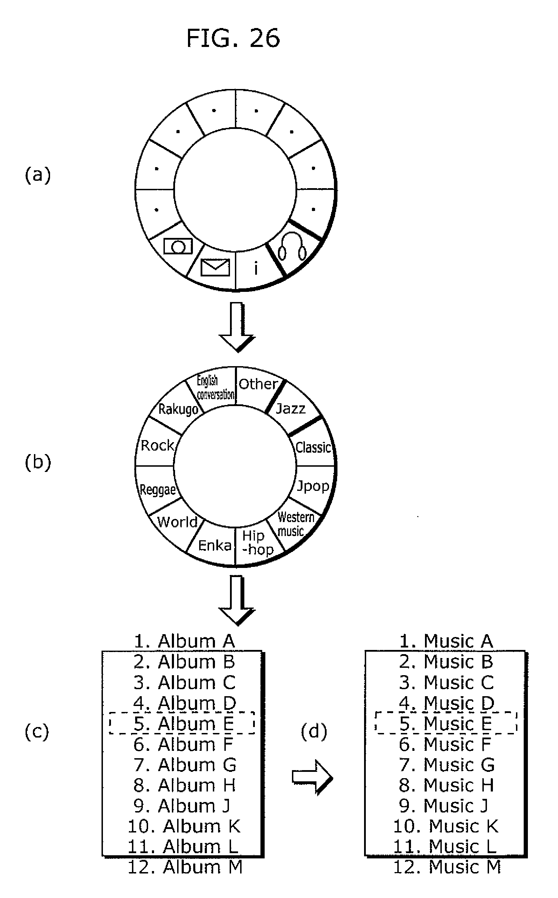

FIG. 26 is a conceptual view of a state of selection of other hierarchical information.

### Numerical References

- 98: speaker unit
- 99: microphone unit
- 101: terminal
- 102: indication unit
- 103: operation unit
- 104: rotator
- 105: encoder
- 107: contact
- 108: mobile phone
- 109: liquid crystal display unit
- 110: input device
- 111: device body
- 120: mechanical unit
- 130: information processing unit
- 131: section specification unit
- 132: rotation amount detection unit
- 133: rotation amount determination unit
- 134: information group specification unit
- 135: information presentation unit
- 136: information group holding unit
- 137: information determination unit

### Best Mode for Carrying Out the Invention

The following describes embodiments of the present invention, with reference to drawings.

### (First Embodiment)

FIG. 5 is a front view of a mobile phone to which an input device according to a first embodiment of the present invention is applied.

A mobile phone 108 includes a liquid crystal display unit 109 which is an image display unit for displaying various information as images, and a speaker unit 98 and a microphone unit 99 for voice communication. Also, an input device 110 according to this embodiment is integrally provided in the mobile phone 108.

In this embodiment, the input device 110 is located near the liquid crystal display unit 109 of the mobile phone 108, and used for selecting and executing functions of the mobile phone 108 and inputting symbols and characters.

FIG. 6 is an exploded view of the input device 110, where FIG. 6(a) is a front view, FIG. 6(b) is a front view with a rotator 104 removed, and FIG. 6(c) is a sectional view taken along the line I-I in FIG. 6(a).

As shown in FIG. 6, the input device 110 includes terminals 101 as section correspondence units, an indication unit 102, an operation unit 103, the rotator 104, an encoder 105, and a contact 107 as a section selection unit. Note that a device body 111 is integral with a body of the mobile phone 108.

The indication unit 102 is a unit where characters such as the alphabet, numbers, and symbols are shown, and is engraved or printed on the device body 111. The indication unit 102 is arranged so as to correspond to each section of an annular area which is divided into 12 sections, and is made up of a character and the like that represent an information group corresponding to the section.

The terminals 101 are conductive members fixed on the device body 111. As shown in FIG. 6(b), the 12 terminals 101 are arranged in a state where the annular area, which is centered at a rotation center of the rotator 104, is divided into the 12 sections in a rotation direction. The 12 terminals 101 correspond one-to-one to the different parts of the indication unit 102.

The rotator 104 is a disc-shaped member that is rotatable about its center on the device body 111. The rotator 104 is attached to the device body 111 so as to sink toward the device body 111 when the operation unit 103 provided on a surface of the rotator 104 is pressed. The rotator 104 has a mechanism like a toggle switch. That is, once sunk, the rotator 104 maintains the sunk state, and when pressed again, the rotator 104 is released from the sunk state.

A user of the mobile phone 108 according to this embodiment can rotate the rotator 104, whether the rotator 104 is in the pressed state or in the released state.

The contact 107 is attached on a surface of the rotator 104 opposite to the operation unit 103 so as to face downward. The contact 107 contacts one of the terminals 101 when the rotator 104 is in the sunk state, and does not contact any of the terminals 101 when the rotator 104 is not in the sunk state.

Which is to say, the combination of the contact 107 and the terminals 101 functions as a press detection unit provided on the device body 111, to detect whether or not the annular area underneath the rotator 104 is pressed. The expression "provided on the device body 111" used here represents a concept that includes not only the case where the press detection unit is attached directly to the device body 111 but also the case where some kind of member is attached to the device body 111 and the press detection unit is attached to this member.

The encoder 105 is an optical encoder that optically obtains a rotation amount of the rotator 104 as pulses. While the rotator 104 rotates one turn, the encoder 105 generates 12 pulse signals with a uniform interval. The operation unit 103 is a protrusion formed on the surface of the rotator 104, and is used as a knob when the user rotates the rotator 104. The operation unit 103 also has a function of pointing to a desired position in the indication unit 102. For example, when the user presses the rotator 104 with the operation unit 103 pointing to the part of the indication unit 102 showing 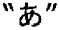 , the contact 107 provided on the back surface of the rotator 104 opposite to the operation unit 103 comes into contact with the terminal 101 corresponding to 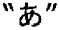 . Hence the terminal 101 corresponding to 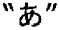 can be specified.

FIG. 7 is a sectional view showing a state of connection and separation between the terminal 101 and the contact 107, where FIG. 7(a) shows a state before a press, and FIG. 7(b) shows a state where the rotator 104 is rotated in the pressed state.

In this embodiment, by pressing the operation unit 103, the contact 107 is brought into connection with one of the 12 terminals 101. By such selective conduction, a section corresponding to the indication unit 102 can be specified.

Also, since the rotator 104 to which the contact 107 is attached has a toggle mechanism, the contact 107 and the terminal 101 which contact with each other as a result of the press keep contact even after the user lifts his/her finger off to release the operation unit 103. The conduction state is maintained until the next press. The conduction state can be maintained even while the user rotates the rotator 104, for the following reason. Since a gap between adjacent terminals 101 is smaller than a width of the contact 107, even when the rotator 104 is rotated, the contact 107 contacts the next terminal 101 before separating from the terminal 101, to thereby keep conduction.

FIG. 8 is a block diagram showing a functional structure of the input device according to this embodiment.

As shown in FIG. 8, the input device 110 is conceptually divided into a mechanical unit 120 having a mechanical structure and an information processing unit 130 for processing information. The mechanical unit 120 includes the components relating to the mechanism described above. The information processing unit 130 includes a section specification unit 131, a rotation amount detection unit 132, a rotation amount determination unit 133, an information group specification unit 134, an information presentation unit (image generation unit) 135, an information group holding unit 136, and an information determination unit (unit information specification unit) 137.

The section specification unit 131 is a processing unit that acquires an identifier of a terminal 101 which first conducts with the contact 107 as a result of pressing the operation unit 103, to specify which of the 12 terminals 101 conducts with the contact 107.

The rotation amount detection unit 132 is a processing unit that, as soon as the section specification unit 120 specifies one of the terminals 101, counts pulse signals generated from the encoder 105 and constantly outputs rotation amount information. Also, the rotation amount detection unit 132 judges, based on the signals from the encoder 105, whether the rotator 104 rotates clockwise or counterclockwise, and outputs information about the rotation direction.

The rotation amount determination unit 133 is a processing unit that constantly receives the rotation amount information from the rotation amount detection unit 132, and outputs a rotation amount at the time when the contact 107 becomes not contacting any of the terminals 101, that is, when the conduction state between the terminal 101 and the contact 107 is released.

The information group specification unit 134 is a processing unit that specifies an information group corresponding to a section specified by the section specification unit 131, i.e., the specified terminal 101, by extracting the information group from the information group holding unit 136, and outputs the extracted information group to the information presentation unit 135.

The information presentation unit 135 is a processing unit that generates an image corresponding to input target information which includes unit information of at least one part of the obtained information group, and outputs the generated image to the liquid crystal display unit 109.

The rotation amount determination unit 133 is a processing unit that determines the rotation amount detected by the rotation amount detection unit 132 at the time when the conduction state between the terminal 101 and the contact 107 is released, and outputs the determined rotation amount to the information determination unit.

The information determination unit 137 is a processing unit that determines unit information, in the information group, corresponding to the rotation amount determined by the rotation amount determination unit 133 as input information, and outputs the input information.

FIG. 9 is a conceptual view of information groups held in the information group holding unit 136.

In FIG. 9, information shown in each cell is unit information, and groups of such unit information arranged in a row direction are information groups 501 to 512. FIG. 9 shows the 12 information groups, which correspond one-to-one to the 12 terminals 101. The information group holding unit 136 holds a plurality of tables which are each made up of information groups, and a table to be used is selected depending on a mode such as a Japanese input mode, a number input mode, and an English input mode.

In FIG. 9, "terminal number" indicates an identifier for identifying a terminal 101 which conducts as a result of pressing the rotator 104, and "rotation amount" corresponds to a number obtained by the rotation amount detection unit 132 counting pulses outputted from the encoder 5. Though hiragana characters and symbols appear in FIG. 9, they are illustrated merely for ease of explanation. The information group holding unit 136 actually holds codes corresponding to such characters and symbols.

The following describes an operation of the input device having the above structure.
FIG. 10 is a flowchart showing an operation of the input device 110.

FIG. 11 is a graph representing a press and rotation of the rotator 104 and a signal state resulting from the press and rotation.

FIG. 12 shows a display example of information inputted in the input device 110.

An example of inputting three characters 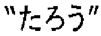 using the input device 110 is described below.

First, the user rotates the rotator 104 so that the operation unit 103 points to the indication unit 102 (the position of 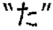 ) where a top character of a desired information group is shown (<1> in FIG. 11(a)). The user presses the rotator 104 at the position (<2> in FIG. 11(a)).

As a result of this operation, conduction occurs between a terminal 101 and the contact 107. The section specification unit 131 acquires a terminal number (4) of the terminal 101 in the conduction state, to specify a section (Step S601). Note here that the rotation amount detection unit 132 does not detect a rotation amount for the rotation of the rotator 104 (<1> in FIG. 11(a)) before the section is specified.

After the section specification unit 131 specifies the section, the information group specification unit 134 extracts the information group 504 (information relating to the 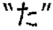 row) corresponding to the specified section, from the information groups (table) held in the information group holding unit 136 (Step S602). The information presentation unit 135 generates an image relating to the 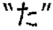 row based on the extracted information group 504 as shown in FIG. 12(a), and outputs the generated image (Step S603).

Since the character to be inputted is 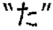 the user presses the operation unit 103 again, without rotating the rotator 104 (<3> in FIG. 11(a)). The rotation amount detection unit 132 detects the number of pulses from the encoder 105, as 0 (Step S604). The information presentation unit 135 outputs the same image as before (Step S605).

Due to the toggle mechanism of the rotator 104, the terminal 101 and the contact 107 separate from each other and enter the insulation state. The rotation amount determination unit 133 determines a rotation amount (0) (Step S606).

Following the determination of the rotation amount determination unit 133, the information determination unit 137 specifies information corresponding to the terminal number (4) and the rotation amount (0), that is, information corresponding to 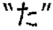 in the 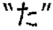 row, from the information group 504. The information determination unit 137 outputs the specified information.

Thus, the input device 110 outputs one character, i.e, one piece of unit information.

Next, the user rotates the rotator 104 so that the operation unit 103 points to the position of 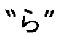 in the indication unit 102 (<4> in FIG. 11(a)), and presses the rotator 104 at the position (<5> in FIG. 11(a)).

The section specification unit 131 acquires a terminal number (9) of a terminal 101 which conducts with the contact 107 as a result of this operation, to specify a section (Step S601).

After the section specification unit 131 specifies the section, the information group specification unit 134 specifies the information group 509 (information relating to the 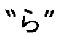 row) corresponding to the specified section, from the information group holding unit 136 (Step S602). The information presentation unit 135 generates an image relating to the 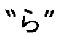 row as shown in FIG. 12(b), and outputs the generated image to the liquid crystal display unit 109 (Step S603).

Since the character to be inputted next is 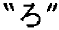 , the user rotates the rotator 104 clockwise (<6> in FIG. 11(a)).

The rotation amount detection unit 132 detects pulses from the encoder 105 (Step S604). The information presentation unit 135 sequentially generates images which each highlight unit information corresponding to the number of detected pulses and also contain the immediately preceding and succeeding unit information, in the order of 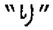 → 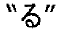 → 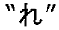 → 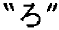 as shown in FIG. 12(c). The information presentation unit 135 outputs the generated images to the liquid crystal display unit 109 (Step S605).

At the time when 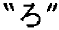 is highlighted, the user presses the operation unit 103 again (<7> in FIG. 11(a)), to cause insulation between a terminal 101 and the contact 107. Since the rotation amount detection unit 132 detects four pulses, the rotation amount determination unit 133 determines a rotation amount (4) (Step S606).

Following the determination of the rotation amount determination unit 133, the information determination unit 137 determines, as input information, information corresponding to the terminal number (9) and the rotation amount (4), that is, information corresponding to 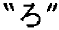 in the 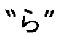 row, from the information group 509. The information determination unit 137 outputs the determined information.

Next, the user rotates the rotator 104 so that the operation unit 103 points to the position of 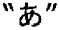 in the indication unit 102 (<8> in FIG. 11(a)), and presses the rotator 104 at the position (<9> in FIG. 11(a)).

The section specification unit 131 acquires a terminal number (1) of a terminal 101 that conducts with the contact 107 as a result of this operation, to specify a section (Step S601).

After the section specification unit 131 specifies the section, the information group specification unit 134 specifies the information group 501 (information relating to the 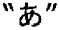 row) corresponding to the specified section, from the information group holding unit 136 (Step S602). The information presentation unit 135 generates an image relating to the 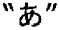 row as shown in FIG. 12(d), and outputs the generated image (Step S603).

Since the character to be inputted next is " 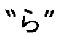 ", the user rotates the rotator 104 clockwise (<10> in FIG. 11(a)).

The rotation amount detection unit 132 detects pulses from the encoder 105 (Step S604). The information presentation unit 135 sequentially generates images which each highlight unit information corresponding to the number of detected pulses and also contain the immediately preceding and succeeding unit information, in the order of 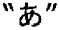 → 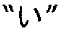 → 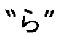 . The information presentation unit 135 outputs the generated images to the liquid crystal display unit 109 (Step S605).

At the time when 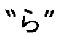 is highlighted as shown in FIG. 12(e), the user presses the operation unit 103 again (<11> in FIG. 11(a)), to cause insulation between a terminal 101 and the contact 107. The rotation amount determination unit 133 determines a rotation amount (2) (Step S606).

Following the determination of the rotation amount determination unit 133, the information determination unit 137 determines, as input information, information corresponding to the terminal number (1) and the rotation amount (2), that is, information corresponding to 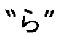 in the 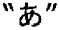 row, from the information group 501. The information determination unit 137 outputs the determined information.

Thus, the selection of the 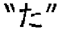 row, the determination of 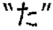 the selection of the 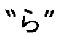 row, the determination of 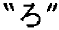 the selection of the 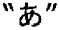 row, and the determination of 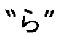 are performed in this order. The user can perform such selection of a desired hiragana row and determination of a target character in the selected row, whether the user is touching the operation unit 103 with his/her finger or has lifted his/her finger off the rotator 104.

According to this structure, efficient Japanese character input can be realized. Therefore, Japanese character input can be performed efficiently by a simple operation.

In particular, the series of operation from the selection of a row to the determination of a character can be performed while the user is touching the operation unit 103 with his/her finger. This contributes to high operability. Moreover, the user can intuitively determine the character without looking at the finger operating the rotator 104, with it being possible to perform highly efficient Japanese character input. In the case where the operation unit 103 is a domical protrusion as shown in FIG. 6(c), the operation unit 103 and the finger contact each other at one point. Accordingly, the user can rotate the rotator 104 smoothly while touching the operation unit 103 with his/her finger. The same advantages can also be achieved with a structure in which the operation unit 103 rotates on the rotator 104.

Though this embodiment uses the rotation amount determined by the rotation amount determination unit 133 as a basis for the subsequent processing, the rotation amount determination unit 133 is not an essential requirement of the present invention. For example, the information determination unit 137 may determine input information based on a rotation amount detected by the rotation amount detection unit 132, when a signal relating to the determination of information is inputted (in this embodiment, when the press detection unit detects that the rotator is pressed again).

In other words, a value may be obtained from the rotation amount detection unit 132 at the point when one operation ends and the next begins, so that the processing is performed based on the obtained value. The present invention can be realized so long as the processing is performed based on a rotation amount, where the explicit rotation amount determination operation (process) is not necessarily required.

It should be noted that unit information is a code for designating a character or a symbol based on a predetermined encoding system. The image display unit 109 displays a character or a symbol designated by an output code. Examples of such an encoding system include JIS, SJIS, EUC, Kuten, and Unicode.

This embodiment describes the use of the rotator 104 having a mechanism like a toggle switch, but the present invention is not limited to this. For instance, instead of rotating the rotator 104 in the pressed state, the rotator 104 which has returned to the floating state after being pressed may be rotated. In such a case, the following structure can be used. When the rotator 104 is pressed once, the optical encoder becomes ON. The rotator 104 which has then returned to the floating state is rotated. When the rotator 104 is pressed again, the optical encoder becomes OFF. The rotation amount can be determined by analyzing signals from when the optical encoder becomes ON to when the optical encoder becomes OFF.

In the case where the rotator 104 has a mechanism like a toggle switch, the rotation amount may be specified without using the optical encoder. One example of this is given below. In addition to storing a connection start section and a connection release section for the contact 107 and the terminals 101, a rotation direction of the rotator 104 is determined based on information about a terminal 101 that connects with the contact 107 following the connection start section. The rotation amount is specified based on the connection start section, the connection release section, and the rotation direction.

This embodiment describes the case where the combination of the contact 107 and the terminals 101 is used as the press detection unit, but the present invention is not limited to this. For example, a sheet-like capacitance touch sensor may be provided on the device body as the press detection unit, instead of the terminals 101. In this case, the section specification unit can specify a pressed section, based on a signal outputted from the touch sensor when the contact 107 comes into contact with the touch sensor. Any other mechanism or sensor capable of detecting a pressure by a human finger can also be used as the press detection unit of the present invention.

This embodiment describes the case where a selected character is highlighted by zoom display as shown in FIG. 12, but the selected character may be highlighted by other methods such as edge enhancement, color enhancement, and deformation.

### (Second Embodiment)

The following describes another embodiment of the present invention with reference to drawings. In this embodiment, parts which are the same as those in the first embodiment have been given the same reference numerals and their explanation has been omitted.

FIG. 13 is a front view of a mobile phone to which an input device according to this embodiment is applied.

FIG. 14 is an exploded view of an input device 110 shown in FIG. 13, where FIG. 14(a) is a front view, FIG. 14(b) is a front view with a rotator 104 removed, and FIG. 14(c) is a sectional view taken along the line II-II in FIG. 14(a).

As shown in FIG. 14(b), the input device 110 according to this embodiment includes first terminals 101a and a second terminal 101b as section correspondence units.

The first terminals 101a are fixed on the device body 111. As shown in FIG. 14(b), 12 first terminals 101a are arranged circularly about the center of the rotator 104. The first terminals 101a correspond one-to-one to the sections of the device body 111.

The second terminal 101b is fixed on the device body 111, as with the first terminals 101a. Unlike the first terminals 101a, however, the second terminal 101b is one continuous ring as shown in FIG. 14(b). The first terminals 101a and the second terminal 101b are concentric about the rotation center of the rotator 104.

In this embodiment, the operation unit 103 is circumferentially segmented into 12 areas in correspondence with the first terminals 101a, so that the operation unit 103 can be pressed in each individual area. This operation unit 103 does not have a toggle mechanism. Accordingly, the operation unit 103 returns to the original state when the user stops pressing it.

In this embodiment, the contact 107 is a conductor that is normally not connected to anything. When the user presses the operation unit 103, the contact 107 contacts a first terminal 101a and the second terminal 101b, to thereby connect the first terminal 101a and the second terminal 101b. The contact 107 is formed on the back surface of the rotator 104 corresponding to each operation unit 103.

In this embodiment, the first terminals 101a, the second terminal 101b, and the contacts 107 cooperatively function as a press detection unit for detecting a press of the rotator 104.

The rotator 104 is rotatable in a state where the user is holding down the operation unit 103.

FIG. 15 is a block diagram showing a functional structure of the input device according to this embodiment.

A functional structure of the information processing unit 130 shown in FIG. 15 is the same as that of the first embodiment. On the other hand, a structure of the mechanical unit 120 for specifying a section and a structure of the mechanical unit 120 for generating a rotation amount are different from those of the first embodiment.

In this embodiment, the section specification unit 131 detects a first terminal 101a that is connected to the second terminal 101b by a contact 107, and specifies a section based on a terminal number for identifying the first terminal 101a.

The rotation amount detection unit 132 detects a first terminal 101a that is connected to and then separated from the second terminal 101b by the contact 107, acquires a terminal number for identifying the first terminal 101a, and detects a rotation amount based on a difference between the acquired terminal number and the terminal number used for specifying the section.

An operation of the user and the input device when inputting the three characters 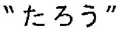 according to this embodiment is described below. Since the processing flow of the input device is the same as that of the first embodiment, the following description refers to FIGS. 9. 10, and 12.

FIG. 16 is a graph representing a press and rotation of the rotator 104 and a signal state resulting from the press and rotation.

First, the user selects an operation unit 103 that points to the indication unit 102 (the position of 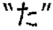 ) where a top character of a desired information group is shown, and presses the operation unit 103 (<1> in FIG. 16(a)). In this embodiment, the operation unit 103 is provided for each section. Accordingly, there is no need to rotate the rotator 104 to position the operation unit 103 at a desired section.

As a result of this operation, conduction occurs between a first terminal 101a and the second terminal 101b by a contact 107 that is provided on the back surface of the rotator 104 corresponding to the pressed operation unit 103. The section specification unit 131 acquires a terminal number (4) of the first terminal 101a in the conduction state, to specify a section (Step S601).

After the section specification unit 131 specifies the section, the information group specification unit 134 extracts the information group 504 (information relating to the 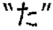 row) corresponding to the specified section, from the information groups (table) held in the information group holding unit 136 (Step S602). The information presentation unit 135 generates an image relating to the 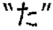 row based on the extracted information group as shown in FIG. 12(a), and outputs the generated image (Step S603).

Since the character to be inputted is 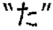 the user releases the operation unit 103 from the pressed state, without rotating the rotator 104. Which is to say, the user lifts his/her finger off the rotator 104 (<2> in FIG. 16(a)). The rotation amount determination unit 133 acquires the terminal number (4) of the first terminal 101a which ceases conduction as a result of the release of the press, calculates a difference from the terminal number (4) acquired when specifying the section, and determines a rotation amount (0). Meanwhile, the information presentation unit 135 outputs the same image as before (Step S605).

Following the determination of the rotation amount determination unit 133, the information determination unit 137 specifies information corresponding to the terminal number (4) and the rotation amount (0), that is, information corresponding to 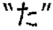 in the 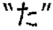 row, from the information group 504, and outputs the specified information.

In this way, the input device 110 outputs one character, i.e., one piece of unit information.

Next, the user presses an operation unit 103 that points to the position of 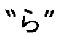 in the indication unit 102 (<3> in FIG. 16(a)).

The section specification unit 131 acquires a terminal number (9) of a first terminal 101a that is brought into the conduction state as a result of this operation, to specify a section (Step S601).

After the section specification unit 131 specifies the section, the information group specification unit 134 specifies the information group 509 (information relating to the 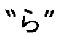 row) corresponding to the specified section, from the information group holding unit 136 (Step S602). The information presentation unit 135 generates an image relating to the 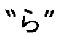 row as shown in FIG. 12(b), and outputs the generated image (Step S603).

Since the character to be inputted next is 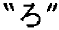 the user rotates the rotator 104 counterclockwise, while holding down the operation unit 103 with his/her finger (<4> in FIG. 16(a)).

The rotation amount detection unit 132 acquires a terminal number (8) of a first terminal 101a that connects with the second terminal 101b next, calculates a difference (-1) from the terminal number (9) acquired when specifying the section, and detects a rotation amount (Step S604). Since the rotation amount is a negative value, the information presentation unit 135 performs a calculation of 10 - 5 + (-1) = 4, generates an image that contains 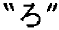 corresponding to the rotation amount (4) together with the immediately preceding and succeeding 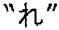 and 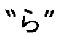 and outputs the generated image (Step S605). In the above expression, "10" is the number of all pieces of unit information which constitute the information group, and "5" is the number of pieces of unit information which are blank.

At the time when 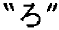 is highlighted, the user lifts the finger off the operation unit 103 (<5> in FIG. 16(a)), to bring the first terminal 101a into the insulation state. The rotation amount determination unit 133 determines the same rotation amount (4) as above (Step S606).

Following the determination of the rotation amount determination unit 133, the information determination unit 137 determines, from the information group 509, information corresponding to the terminal number (9) and the rotation amount (4), that is, information corresponding to 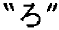 in the 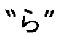 row, as input information. The information determination unit 137 outputs the determined information.

Next, the user presses an operation unit 103 that points to the position of 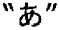 in the indication unit 102 (<6> in FIG. 11(a)).

The section specification unit 131 acquires a terminal number (1) of a first terminal 101a that is brought into the conduction state as a result of this operation, to specify a section (Step S601).

After the section specification unit 131 specifies the section, the information group specification unit 134 extracts the information group 501 (the information group relating to the 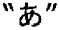 row) corresponding to the specified section, from the information groups held in the information group holding unit 136 (Step S602). The information presentation unit 135 generates an image relating to the 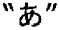 row based on the information group 501 as shown in FIG. 12(d), and outputs the generated image (Step S603).

Since the character to be inputted next is 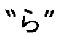 the user rotates the rotator 104 clockwise (<7> in FIG. 11(a)).

The rotation amount detection unit 132 sequentially acquires terminal numbers (2) and (3) of first terminals 101a that are brought into the connection state, calculates differences (1) and (2) from the terminal number (1) acquired when specifying the section, and detects rotation amounts (Step S604). Since the rotation amounts are positive values, the information presentation unit 135 sequentially generates images which each highlight unit information corresponding to the difference and also contain the immediately preceding and succeeding unit information, in the order of 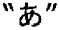 → 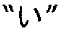 → 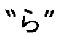 . The information presentation unit 135 outputs the generated images (Step S605).

At the time when 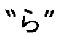 is highlighted as shown in FIG. 12(e), the user lifts the finger off the operation unit 103 (<8> in FIG. 11(a)), to bring the first terminal 101a into the insulation state. The rotation amount determination unit 133 determines a rotation amount (2) (Step S606).

Following the determination of the rotation amount determination unit 133, the information determination unit 137 specifies information corresponding to the terminal number (1) and the rotation amount (2), that is, information corresponding to 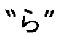 in the 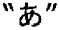 row, from the information group 501, and outputs the specified information.

According to this structure, the use of a rotatable switch enables efficient Japanese character input in a portable device. Therefore, Japanese character input can be performed efficiently by a simple operation.

Moreover, by inverse rotation, unit information can be selected in the negative direction, too. This contributes to more efficient Japanese character input.

Furthermore, in the input device according to this embodiment, there is no need to use a cable for sending/receiving an electrical signal to/from the rotator 104. This saves the need to provide a contact (such as a brush) that permits a rotational movement, with it being possible to simplify the structure of the rotator 104.

It should be noted that the present invention is not limited to this embodiment. For instance, two operation units 103 may be provided on the rotator 104, as shown in FIG. 17(a). That is, the number of operation units 103 is arbitrary. Also, as shown in FIGS. 17(a) and 17(b), a plurality of unrotatable switches, such as cursor keys 151 and a mode selection key 150, may be provided at a center of the rotator 104 having an annular shape.

Also, as shown in FIG. 18, the input device according to the present invention can be used not only for character input but also for input of hierarchical information and the like. In detail, the user rotates the rotator 104 to turn information of one layer annularly displayed on the liquid crystal display unit 109, so that desired information is positioned at the Δ mark. The user then presses the operation unit 103 to annularly display the next layer. The user further positions desired information at the Δ mark, and presses the operation unit 103 again. In this way, information of a lower layer can be selected easily. Rotating the graphics displayed on the liquid crystal display unit 109 in conjunction with the wheel movement allows the user to understand the hierarchical structure intuitively.

As one example, when the user presses the operation unit 103 while positioning the "mail" icon at the Δ mark as shown in FIG. 19(a), icons which belong to a lower layer of "mail", such as "receive", "new", "send", "group", "initial", ... , are annularly displayed on the liquid crystal display unit 109, as shown in FIG. 19(b). Next, when the user presses the operation unit 103 while positioning the "receive" icon at the Δ mark, icons (A to L) for identifying a plurality of mail messages are annularly displayed on the liquid crystal display unit 109 with the contents of a mail message corresponding to the icon J at the Δ mark being displayed at the center, as shown in FIG. 19(c).

In the case where the number of received mail messages exceeds the number of mail messages that can be displayed annularly on the liquid crystal display unit 109, icons (such as M to X, not illustrated) for identifying other mail messages may be annularly displayed by rotating the rotator 104 more than one turn.

Lastly, when the user presses the operation unit 103 while positioning an icon of a mail message which he/she wants to read at the Δ mark, the text of the corresponding mail message is displayed on the liquid crystal display unit 109.

Thus, by pressing the operation unit 103 to switch between layers and rotating the rotator 104 to select an icon in one layer, even when the hierarchical information has many layers, the user can slowly check necessary parts while quickly skipping unnecessary parts. Hence the user can select information intuitively. Also, since a selection of an icon can be changed by a rotation amount, even when numerous choices exist, the user can easily select necessary information.

Also, as shown in FIG. 20, information ("M" in FIG. 20) for changing a mode may be held as unit information corresponding to the rotation amount (0) in each information group. In this case, by specifying a section and determining a rotation amount without rotating the rotator 104, the user can input information for changing a mode (table in FIG. 20) without pressing any other key.

Suppose the user wants to input a character in the 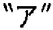 row of the double-byte katakana. The user moves the operation unit 103 to the position of 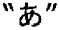 presses the rotator 104, and releases the rotator 104 without rotating it. Since the press is released with the rotation angle 0, a mode change is determined instead of a character. As a result, the character input mode is changed from M1 to M2. In the state where the mode is changed, by pressing the rotator 104 again and rotating the rotator 104 to generate pulses, the user can input a character in the 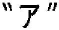 row of the double-byte katakana corresponding to the mode M2.

Also, by using the input device according to the present invention, it is possible to easily select hierarchical information and input the selected information.

The following describes an example of selecting music content classified in a hierarchical structure and inputting information relating to music.

As shown in FIG. 26(a), by selecting a specific mode, characters or icons representing information groups are displayed annularly on the liquid crystal display unit 109, in the same fashion as the indication unit 102.

When the user points the operation unit 103 to the position of 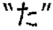 4GHI" in the indication unit 102, the "music (headphone)" icon is highlighted on the liquid crystal display 109 (FIG. 26(a)). When the user presses the operation unit 103 in this state, genres in a lower layer of music are annularly displayed on the liquid crystal display unit 109, as shown in FIG. 26(b).

In this embodiment, the number of types of music, mail, or the like is limited to no greater than 12, and so the number of genres of music is limited to no greater than 12. This makes it possible to correspond the types or the genres one-to-one to the 12 sections of the annular area. As a result, the user can select a type or a genre based on the positional relation between the device body 111 and his/her finger, without looking at the hand.

While holding down the operation unit 103, the user rotates the rotator 104 until the operation unit 103 points to the position of 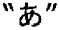 1" in the indication unit 102, to select jazz. The user then releases the operation unit 103 from the pressed state, to determine the selection of jazz. Since the information groups are each arranged to correspond to a different one of the 12 sections of the annular area, the user can determine the genre without looking at the hand, once he/she becomes accustomed to the arrangement.

After the genre is determined, album titles are displayed as shown in FIG. 26(c). Because the number of album titles may be more than 12, the album titles are listed vertically as shown in FIG. 26(c). In FIG. 26(c), a rectangular box represents a display range of the liquid crystal display unit 109. An album title shown outside the rectangular box is in a display wait state, and can be displayed by rotating the rotator 104.

The display on the liquid crystal display unit 109 is scrolled according to the rotation of the rotator 104. The amount of scrolling corresponds to the rotation amount of the rotator 104 from the position at which the genre is selected. This enables the user to easily select from 13 or more information groups.

The user rotates the rotator 104 without pressing the operation unit 103 so that a desired album is positioned in a dashed-line box. The user then presses the operation unit 103, as a result of which the display switches to a music screen as shown in FIG. 26(d). While holding down the operation unit 103, the user rotates the rotator 104 to position desired music in the dashed-line box. The user then releases the operation unit 103, as a result of which information relating to the desired music is inputted.

According to the present invention, even when information groups have many layers as mentioned above, the user can perform the series of operation up to the determination of unit information without lifting his/her finger off.

### (Third Embodiment)

The following describes an embodiment of inputting the alphabet, with reference to drawings. In this embodiment, parts which are the same as those in the above embodiments have been given the same reference numerals and their explanation has been omitted.

In this embodiment, the structure of the input device 110 is the same as that of the first embodiment, for both the mechanical unit 120 and the information processing unit 130.

FIG. 21 is a conceptual view of information groups held in the information group holding unit 136.

In FIG. 21, information shown in each cell is unit information, and groups of such unit information arranged in a row direction are information groups. The information groups correspond one-to-one to 10 terminals out of the 12 terminals 101. The information group holding unit 136 holds a plurality of tables which are each made up of information groups. In this embodiment, the alphabet mode is selected.

In FIG. 21, "position" indicates an identifier for identifying a terminal 101 that is brought into conduction by the rotator 104, and "rotate" corresponds to a number obtained by the rotation amount detection unit 132 counting pulses outputted from the encoder 5. Though alphabetic characters and symbols appear in FIG. 21, they are illustrated merely for the ease of explanation. Codes corresponding to such characters and symbols may be held in the actual information group holding unit 136.

The following describes an operation of the input device having the above structure.

FIG. 22 is a flowchart showing an operation of the input device 110.

FIG. 23 is a graph representing a press and rotation of the rotator 104 and a signal state resulting from the press and rotation.

FIG. 24 shows a display example of information inputted in the input device 110. An example of inputting three characters "saw" using the input device 110 is described below.

First, the user rotates the rotator 104 so that the operation unit 103 points to the indication unit 102 (the position of "pqrs") where a top character of a desired information group is shown (<1> in FIG. 23(a)). The user presses the rotator 104 at the position (<2> in FIG. 23(a)).

As a result of this operation, conduction occurs between a terminal 101 and the contact 107. The section specification unit 131 acquires a terminal number (6) of the terminal 101 in the conduction state, to specify a section (Step S601). Note here that the rotation amount detection unit 132 does not detect a rotation amount for the rotation of the rotator 104 before the section is specified.

After the section specification unit 131 specifies the section, the information group specification unit 134 extracts an information group 504 (information relating to the "pqrs" group) corresponding to the specified section, from the information groups (table) held in the information group holding unit 136 (Step S602). The information presentation unit 135 generates an image relating to the "pqrs" group based on the extracted information group 504 as shown in FIG. 24(a), and outputs the generated image.

Since the character to be inputted is "s", the user rotates the rotator 104 clockwise (<3> in FIG. 23).

The rotation amount detection unit 132 detects pulses from the encoder 105 (Step S604). The information presentation unit 135 sequentially generates images which each highlight unit information corresponding to the number of detected pulses and also contain the immediately preceding and succeeding unit information, in the order of "p" → "q"→ "r" → "s" as shown in FIGS. 24(b), 24(c), 24(d), and 24(e). The information presentation unit 135 outputs the generated images (Step S605).

At the time when "s" is highlighted, the user presses the operation unit 103 again (<4> in FIG. 23), to cause insulation between the terminal 101 and the contact 107. Since the rotation amount detection unit 132 detects three pulses, the rotation amount determination unit 133 determines a rotation amount (3) (Step S606).

Following the determination of the rotation amount determination unit 133, the information determination unit 137 specifies information corresponding to the terminal number (6) and the rotation amount (3), that is, information corresponding to "s" in the "pqrs" group, from the information group 509, and outputs the specified information.

Since the character to be inputted next is "a", the user rotates the rotator 104 so that the operation unit 103 points to the position of "a" in the indication unit 102 (<5> in FIG. 23), and presses the rotator 104 at the position (<6> in FIG. 23). The section specification unit 131 acquires a terminal number (1) of a terminal 101 which is brought into conduction as a result of this operation, to specify a section (Step S601).

After the section specification unit 131 specifies the section, the information group specification unit 134 extracts an information group 504 (information relating to the "abc" group) corresponding to the specified section, from the information groups (table) held in the information group holding unit 136 (Step S602). The information presentation unit 135 generates an image relating to the "abc" group based on the extracted information group 504 as shown in FIG. 24(f), and outputs the generated image. Since the character to be inputted is "a", the user presses the operation unit 103 again without rotating the rotator 104 (<7> in FIG. 23). The rotation amount detection unit 132 detects the number of pulses from the encoder 105 as 0 (Step S604). The information presentation unit 135 outputs the same image as before (Step S605).

Due to the toggle mechanism of the rotator 104, the terminal 101 and the contact 107 separate from each other and enter the insulation state, and the rotation amount determination unit 133 determines a rotation amount (0) (Step S606).

Following the determination of the rotation amount determination unit 133, the information determination unit 137 specifies information corresponding to the terminal number (1) and the rotation amount (0), that is, information corresponding to "a" in the "abc" group, from the information group 504, and outputs the specified information.

In this way, the input device 110 outputs one character, that is, one piece of unit information.

Since the character to be inputted next is "w", the user rotates the rotator 104 clockwise (<8> in FIG. 23), and presses the rotator 104 at a desired position (<9> in FIG. 23). The section specification unit 131 acquires a terminal number (8) of a terminal 101 which is brought into conduction as a result of this operation, to specify a section (Step S601).

After the section specification unit 131 specifies the section, the information group specification unit 134 extracts an information group 504 (information relating to the "wxyz" group) corresponding to the specified section, from the information groups (table) held in the information group holding unit 136 (Step S602). The information presentation unit 135 generates an image relating to the "wxyz" group based on the extracted information group 504 as shown in FIG. 24(h), and outputs the generated image. Since the character to be inputted is "a", the user presses the operation unit 103 again, without rotating the rotator 104 (<10> in FIG. 23). The rotation amount detection unit 132 detects the number of pulses from the encoder 105 as 0 (Step S604). The information presentation unit 135 outputs the same image as before (Step S605).

Due to the toggle mechanism of the rotator 104, the terminal 101 and the contact 107 separate from each other and enter the insulation state, and the rotation amount determination unit 133 determines a rotation amount (0) (Step S606).

Following the determination of the rotation amount determination unit 133, the information determination unit 137 specifies information corresponding to the terminal number (8) and the rotation amount (0), that is, information corresponding to "w" in the "wxyz" group, from the information group 504, and outputs the specified information.

Thus, the user can select a desired group of the alphabet and determine a target character in the selected group, whether he/she is touching the operation unit 103 with the finger or has lifted the finger off the rotator 104.

According to this structure, efficient alphabet character input can be realized. Therefore, alphabet character input can be performed efficiently by a simple operation.

In particular, the series of operation from the selection of a row to the determination of a character can be performed while the user is touching the operation unit 103 with his/her finger. This contributes to high operability. Moreover, the user can intuitively determine the character without looking at the finger operating the rotator 104, with it being possible to perform highly efficient Japanese character input. In the case where the operation unit 103 is a domical protrusion as shown in FIG. 6(c), the operation unit 103 and the finger contact each other at one point. Accordingly, the user can rotate the rotator 104 smoothly while touching the operation unit 103 with his/her finger. The same advantages can equally be achieved with a structure in which the operation unit 103 rotates on the rotator 104.

### (Fourth Embodiment)

The following describes an operation of the user and the input device when inputting the three characters "saw" using the mechanism described in the second embodiment. In this embodiment, parts which are the same as those in the above embodiments have been given the same reference numerals and their explanation has been omitted.

FIG. 25 is a graph representing a press and rotation of the rotator 104 and a signal state resulting from the press and rotation. First, the user selects an operation unit 103 that points to the indication unit 102 (the position of "pqrs") where a top character of a desired information group is shown, and presses the operation unit 103 (<1> in FIG. 12(a)). In this embodiment, since the operation unit 103 is provided for each section, there is no need to rotate the rotator 104 to position the operation unit 103 at a desired section as in the first and third embodiments.

As a result of this operation, conduction occurs between a first terminal 101a and the second terminal 101b by a contact 107 which is provided on the back surface of the rotator 104 corresponding to the pressed operation unit 103. The section specification unit 131 acquires a terminal number (6) of the first terminal 101a in the conduction state, to specify a section (Step S601).

After the section specification unit 131 specifies the section, the information group specification unit 134 extracts an information group 504 (information relating to the "pqrs" group) corresponding to the specified section, from the information groups (table) held in the information group holding unit 136 (Step S602). The information presentation unit 135 generates an image relating to the "pqrs" group based on the extracted information group as shown in FIG. 24(b), and outputs the generated image.

Since the character to be inputted is "s", the user rotates the rotator 104 counterclockwise, while holding down the operation unit 103 with the finger (<2> in FIG. 25).

The rotation amount detection unit 132 acquires a terminal number (5) of a first terminal 101a that is brought into the connection state next, calculates a difference (-1) from the terminal number (6) acquired when specifying the section, and detects a rotation amount (Step S604). Since the rotation amount is a negative value, the information presentation unit 135 performs a calculation of 16 - 0 + (-1) = 15, generates an image which contains "s" corresponding to the rotation amount (15) together with the immediately preceding and succeeding "r" and "p", and outputs the generated image (Step S605). In the above expression, "16" is the number of all pieces of unit information which constitute the information group, and "0" is the number of pieces of unit information which are blank.

At the time when "s" is highlighted, the user presses the operation unit 103 again (<3> in FIG. 25), to cause insulation between a terminal 101 and the contact 107. The rotation amount determination unit 133 determines a rotation amount (15) (Step S606).

Following the determination of the rotation amount determination unit 133, the information determination unit 137 determines, as input information, information corresponding to the terminal number (6) and the rotation amount (15), that is, information corresponding to "s" in the "pqrs" group, from the information group 509. The information determination unit 137 outputs the determined information.

Operations of <4> to <7> in FIG. 25(a) are the same as those in the third embodiment, so that their explanation has been omitted here.

According to this structure, the use of a rotatable switch enables efficient character input in a portable device. Therefore, character input can be performed efficiently by a simple operation.

Moreover, by inverse rotation, unit information can be selected in the negative direction, too. This contributes to more efficient character input.

Furthermore, in the input device according to this embodiment, there is no need to use a cable for sending/receiving an electrical signal to/from the rotator 104. This saves the need for providing a contact (such as a brush) that permits a rotational movement, with it being possible to simplify the structure of the rotator 104.

Although the above embodiments describe the case where the input device according to the present invention is used in a mobile phone as one example, the present invention should not be limited to a mobile phone, and is equally applicable to a personal computer, a television remote control, and the like.

Also, in the case where an image display device and an input device are separate from each other as with a television remote control, at least one part of the units (the information group holding unit, the information group specification unit, the information determination unit, and the information presentation unit) other than the press detection unit and the rotation amount detection unit may be provided in the image display device. Such an embodiment is included in the present invention, too.

### Industrial Applicability

The present invention is applicable to an input device for inputting characters and symbols. In particular, the present invention is applicable, for example, to an input device provided in a portable device with which an input operation is performed with one hand.

## Claims

1. An input device comprising:
a device body;
a rotator provided on said device body;
a press detection unit provided on said device body, and operable to detect whether or not said rotator is pressed down to an annular area that is located under said rotator;
a section specification unit operable to specify one of a plurality of sections of the annular area according to a signal from said press detection unit, the annular area being divided into the plurality of sections in a rotation direction of said rotator;
a rotation amount detection unit operable to detect a rotation amount of said rotator, from when said press detection unit detects that said rotator is pressed down to the annular area;
an information group holding unit operable to hold a plurality of information groups corresponding to the plurality of sections;
an information group specification unit operable to specify an information group corresponding to the section specified by said section specification unit, from among the plurality of information groups held in said information group holding unit; and
an information determination unit operable to determine, from the information group specified by said information group specification unit, unit information corresponding to the rotation amount detected by said rotation amount detection unit, as input information.

2. The input device according to Claim 1,
wherein said press detection unit includes:
a plurality of section correspondence units provided on said device body in correspondence with the plurality of sections; and
a section selection unit attached to said rotator, and operable to select one of said plurality of section correspondence units.

3. The input device according to Claim 2,
wherein said plurality of section correspondence units include
a plurality of terminals that are each assigned to a different one of the plurality of sections on said device body, and
said section selection unit includes
a contact attached to a surface of said rotator facing said plurality of terminals, and operable to select one of said plurality of terminals by contacting said terminal.

4. The input device according to Claim 3,
wherein said contact includes a plurality of contacts that correspond to and are equal in number to said plurality of terminals.

5. The input device according to Claim 3, further comprising
an operation unit attached to a surface of said rotator opposite to the surface facing said plurality of terminals, and operable to rotate said rotator,
wherein said contact contacts said terminal when said operation unit is pressed down.

6. The input device according to Claim 1,
wherein said information determination unit is operable to determine, as the input information, the unit information corresponding to the rotation amount detected by said rotation amount detection unit, when said press detection unit detects that said rotator is released from the press or that said rotator is pressed down to the annular area again.

7. The input device according to Claim 1,
wherein said information group specification unit is operable to, after specifying the information group, specify another information group upon detecting, based on the signal from said press detection unit, that said rotator is released from the press or that said rotator is pressed down to the annular area, in a case where the rotation amount detected by said rotation amount detection unit is 0.

8. The input device according to Claim 1, further comprising
an information presentation unit operable to present input target information on a screen, the input target information including at least one part of the information group specified by said information group specification unit and being subject to the determination of the input information by said information determination unit,
wherein said information presentation unit is operable to present the input target information in a form of a circular arc.

9. The input device according to Claim 8,
wherein said information presentation unit is operable to change the input target information presented on the screen, according to the rotation amount detected by said rotation amount detection unit.

10. The input device according to Claim 9,
wherein said information presentation unit is operable to present, on the screen, the unit information corresponding to the rotation amount detected by said rotation amount detection unit, in a larger size than other unit information included in the input target information.

11. The input device according to Claim 9,
wherein said information presentation unit is operable to present, on the screen, the unit information corresponding to the rotation amount detected by said rotation amount detection unit, in a more noticeable color than other unit information included in the input target information.

12. A mobile terminal comprising the input device according to any of Claims 1 to 11.

13. An input method for use in an input device that includes a device body and a rotator provided on the device body, said input method comprising:
a press detection step of detecting whether or not the rotator is pressed down to an annular area that is located under the rotator;
a section specification step of specifying one of a plurality of sections of the annular area according to a detection signal of the press in said press detection step, the annular area being divided into the plurality of sections;
an information group specification step of specifying an information group corresponding to the section specified in said section specification step;
a rotation amount detection step of detecting a rotation amount of the rotator, from when the press is detected in said press detection step; and
an information determination step of determining, from the information group specified in said information group specification step, unit information corresponding to the rotation amount detected in said rotation amount detection step, as input information.

14. An input program for use in an input device that includes a device body and a rotator provided on the device body, said input program causing a computer to execute:
a press detection step of detecting whether or not the rotator is pressed down to an annular area that is located under the rotator;
a section specification step of specifying one of a plurality of sections of the annular area according to a detection signal of the press in said press detection step, the annular area being divided into the plurality of sections;
an information group specification step of specifying an information group corresponding to the section specified in said section specification step;
a rotation amount detection step of detecting a rotation amount of the rotator, from when the press is detected in said press detection step; and
an information determination step of determining, from the information group specified in said information group specification step, unit information corresponding to the rotation amount detected in said rotation amount detection step, as input information.
